# EUROPEAN PATENT APPLICATION

(11) **EP 2 617 516 A1**
(43) Date of publication of application: **24.07.2013**
(21) Application number: 11824841.8
(22) Date of filing: 26.05.2011
(51) Int. Cl.: B23K 35/30, C22C 19/05, C22C 30/00, C22C 30/02

(54) **NICKEL-BASED HYDROCHLORIC ACID CORROSION RESISTANT ALLOY FOR SOLDERING**

(30) Priority: 13.09.2010 JP 2010203924
(71) Applicant: Fukuda Metal Foil & Powder Co., Ltd., Shimogyo-ku Kyoto-shi Kyoto 600-8435 (JP)
(72) Inventor: OTOBE, Katsunori, Kyoto-shi Kyoto 607-8305 (JP); NISHIMURA, Shinichi, Kyoto-shi Kyoto 607-8305 (JP)
(74) Representative: Dannenberger, Oliver Andre
(86) International application number: PCT/JP2011/062094
(87) International publication number: WO 2012/035829

(57) **Abstract**

Provided is a hydrochloric acid corrosion resistant alloy for brazing that is provided with corrosion resistance against hydrochloric acid, and when brazing various types of stainless steel, can be used for brazing at practical temperatures (1150 °C or less), and has good joint strength and brazeability to the substrate. The hydrochloric acid corrosion resistant alloy of the present invention contains, in mass percent, 6.0-18.0% Mo, 10.0-25.0% Cr, 0.5-5.0% Si, and 4.5-8.0% P, with the remainder being 40.0-73.0% Ni and unavoidable impurities, and the total of Si and P being 6.5-10.5%. In this case, the alloy may contain 12.0% or less of Cu, 20.0% or less of Co, 15.0% or less of Fe, 8.0% or less of W, 5.0% or less of Mn, and 0.5% or less of the total of C, B, Al, Ti, and Nb.

## Description

### TECHNICAL FIELD

The present invention relates to a brazing filler metal for parent metals such as various types of stainless steels used in various types of heat exchangers such as a general-purpose heat exchanger, an EGR (Exhaust Gas Recirculation) cooler, and a waste heat collecting apparatus, and more particularly to a hydrochloric acid corrosion resistant alloy for brazing used for parent metals requiring hydrochloric acid corrosion resistance.

### BACKGROUND ART

Conventionally, those most often used in bonding various types of stainless steel parent metals include BNi-2, BNi-5, and BNi-7 described in JIS Z 3265:1998 "Nickel Brazing Filler Metal"; however, BNi-2 has poor wettability such as wetting, flowing and spreading. Also, since it contains B, B penetrates into the grain boundary of the stainless steel base materials when brazing is carried out, leading to a decrease in strength and corrosion resistance of the base material. BNi-5 has poor wettability and has a high melting point as compared with other Ni brazing filler metal, thereby giving a possibility of exerting influences such as deformation and deterioration on the stainless steel base materials by thermal influence. BNi-7 has low material strength, thereby raising a problem of low joint strength when brazing is carried out.

Also, the Ni-Cr-Si-P type brazing filler metals disclosed in Patent Document 1 below, the Ni-Cr-B-Si-P type brazing filler metals disclosed in Patent Document 2 below, and the Ni-Cr-Cu-Si-P type brazing filler metals disclosed in Patent Document 3 below have a suitable melting point and bonding strength and are excellent in wettability; however, they have low corrosion resistance to hydrochloric acid and hence are not suitable for application to parent metals that require hydrochloric acid corrosion resistance.

### PRIOR ART DOCUMENTS PATENT DOCUMENTS

Patent Document 1: JP-A-2002-144080
Patent Document 2: JP-A-2007-75867
Patent Document 3: JP-A-2009-202198

Under current situations, heat resistance, oxidation resistance, corrosion resistance, suitable melting point, wettability, joint strength, and the like are required in various types of Ni brazing filler metals used for industrial purposes, and there are no brazing filler metals having all of the above properties, so that the Ni brazing filler metal is used properly in accordance with the environment of use.

### DISCLOSURE OF THE INVENTION PROBLEMS TO BE SOLVED BY THE INVENTION

Generally, Ni brazing filler metals are currently widely used in various types of heat exchangers as brazing filler metals provided with joint strength, heat resistance, and corrosion resistance. Then, as one of the heat exchangers, an EGR cooler for an exhaust gas recirculation system can be exemplified, and an application range of the EGR cooler is expanding from the viewpoint of reducing the load upon the environment in recent years.

In this EGR cooler, joint strength, oxidation resistance, and sulfuric acid corrosion resistance are required, so that BNi-2, BNi-5, the Ni-Cr-Si-P type brazing filler metals disclosed in Patent Document 1, the Ni-Cr-B-Si-P type brazing filler metals disclosed in Patent Document 2, the Ni-Cr-Cu-Si-P type brazing filler metals disclosed in Patent Document 3, and the like are currently used. However, the environment of use thereof is increasing in severity in recent years. In particular, when a fuel having a large amount of impurities is used, hydrochloric acid corrosion occurs so that development of a Ni brazing filler metal excellent in hydrochloric acid corrosion resistance besides the oxidation resistance and the sulfuric acid corrosion resistance is a goal to be achieved.

### MEANS FOR SOLVING THE PROBLEMS

In the present invention, in studying alloy composition for developing a Ni brazing filler metal excellent in hydrochloric acid corrosion resistance, the following target values were set, and the conditions were set so as to satisfy all of these.
(Target values)
(1) the liquidus temperature [melting point] is 1130°C or less
(2) the transverse rupture strength [material strength] is 500 N/mm² or more
(3) the wetting area after brazing is 110 mm² or more in wettability [wet-spreading test to SUS304]
(4) the hydrochloric acid corrosion resistance [rate of corrosion decrease by 10% hydrochloric acid] is 3.0 mg/m²·s or less

The hydrochloric acid corrosion resistant alloy for brazing of the present invention satisfying all of the above-described target values (1) to (4) has a feature of having composition containing, in mass%, 6.0 to 18.0% of Mo, 10.0 to 25.0% of Cr, 0.5 to 5.0% of Si, and 4.5 to 8.0% of P, with the remainder being 40.0 to 73.0% of Ni and unavoidable impurities, and the total of Si and P being 6.5 to 10.5%.
Here, the unavoidable impurities mean impurities that are unavoidably mingled during the steps of manufacturing each source material and the like though not intentionally added. Such impurities may include Mg, S, O, N, V, Zr, Sn, and others, and the total amount of these is typically 0.3 mass% or less, which is of a degree such that the action of the present invention is not affected.

Also, the present invention has a feature that the hydrochloric acid corrosion resistant alloy for brazing having the aforementioned feature contains 12.0 mass% or less of Cu.

Also, the present invention has a feature that the hydrochloric acid corrosion resistant alloy for brazing having the aforementioned feature contains, as added elements that do not affect the characteristics, 20.0 mass% or less of Co, 15.0 mass% or less of Fe, 8.0 mass% or less of W, 5.0 mass% or less of Mn, and 0.5 mass% or less of the total of C, B, Al, Ti, and Nb, with the total of these being 20.0 mass% or less.

Next, the reasons why the range of each component in the hydrochloric acid corrosion resistant alloy according to the present invention has been limited will be described.

Mo has an effect of improving the hydrochloric acid corrosion resistance by being contained in Ni solid solution that serves as a base substance (matrix) ; however, a sufficient effect cannot be obtained when the content is less than 6. 0 mass% (hereafter abbreviated as %). Also, when the content exceeds 18.0%, it forms a large amount of intermetallic compound with P to decrease the strength, so that the targeted transverse rupture strength (500 N/mm² or more) cannot be obtained. For this reason, the content of Mo has been defined to be within a range of 6.0 to 18.0%.

Cr is contained in Ni solid solution, improves the heat resistance, oxidation resistance, and strength, and further contributes to adjustment of the melting point; however, the targeted material strength cannot be obtained when the content is less than 10.0%, and moreover, the solidus temperature lowers to widen the temperature width between the solidus line and the liquidus line, so that fusion separation occurs at the time of brazing. Also, when the content exceeds 25.0%, the corrosion resistance against hydrochloric acid considerably decreases, so that the content of Cr has been defined to be within a range of 10.0 to 25.0%.

Si has an effect of lowering the melting point of the alloy by eutectic reaction with Ni; however, a sufficient effect cannot be obtained when the content is less than 0.5%, and the melting point exceeds the targeted liquidus temperature (1130°C or less). Also, when the content exceeds 5.0%, a hypereutectic alloy is formed, whereby the material strength decreases to a large extent and the targeted transverse rupture strength cannot be obtained. For this reason, the content of Si has been defined to be within a range of 0.5 to 5.0%.

P, in the same manner as Si, has an effect of lowering the melting point of the alloy by eutectic reaction with Ni and further improves the wettability; however, a sufficient effect cannot be obtained in view of the melting point and wettability when the content is less than 4.5%. Also, when the content exceeds 8.0%, a hypereutectic alloy is formed, whereby the strength decreases to a large extent and the targeted transverse rupture strength cannot be obtained. For this reason, the content of P has been defined to be within a range of 4.5 to 8.0%.

Further, with regard to Si and P, the melting point and the material strength in particular can be controlled by limiting the amount of Si + P. In other words, when Si + P is less than 6.5%, the melting point will be high and exceeds the targeted liquidus temperature. Also, when Si + P exceeds 10.5%, a hypereutectic alloy is formed, whereby the strength decreases to a large extent and the targeted transverse rupture strength cannot be obtained. For this reason, Si + P has been defined to be within a range of 6.5 to 10.5%.

Cu improves the corrosion resistance by being contained in Ni solid solution; however, when the content exceeds 12.0%, the material strength decreases, and the targeted transverse rupture strength cannot be obtained. For this reason, Cu has been defined to be 12.0% or less.

The hydrochloric acid corrosion resistant alloy for brazing of the present invention can contain, as added elements that do not give adverse effects to the physical properties, 20.0% or less of Co, 15.0% or less of Fe, 8.0% or less of W, 5.0% or less of Mn, and 0.5% or less of the total of C, B, Al, Ti, and Nb. However, in order not to deteriorate the hydrochloric acid corrosion resistance, melting point, material strength, and wettability, the upper limit value of the sum of the amounts of Co, Fe, W, Mn, C, B, Al, Ti, and Nb has been defined to be 20.0%.

### EFFECT OF THE INVENTION

Because of having the following features, the Ni brazing filler metal of the present invention can be applied to a wide range of use as a Ni brazing filler metal having hydrochloric acid corrosion resistance.
(1) Because the liquidus temperature is 1130°C or less, brazing construction can be carried out using a conventional atmosphere furnace for industry.
(2) The Ni brazing filler metal of the present invention has a transverse rupture strength of 500 N/mm² or more and is equipped with suitable strength as a Ni brazing filler metal.
(3) Because the wetting area after brazing to SUS304 is 110 mm² or more, the brazing filler metal at the time of brazing wets, flows, and spreads well on a base material surface, so that the brazeability in brazing is excellent.
(4) The rate of corrosion decrease is 3.0 mg/m²·s or less in a 10% hydrochloric acid (60°C) corrosion test, so that the Ni brazing filler metal of the present invention is excellent in corrosion resistance to hydrochloric acid.

### MODE FOR CARRYING OUT THE INVENTION

The alloy of the present invention can be obtained by completely melting a bare metal, in which Ni as a base and Mo, Cr, Si, and P as added components are adjusted and blended and Cu, Fe, Co, Mn, and others are added in accordance with the needs so as to achieve a predetermined mass percent, in a crucible of a melting furnace, thereafter reducing the molten alloy to powder by the atomization method or the melt-crushing method, or by casting in a predetermined mold to form a rod shape or a plate shape.

In particular, an alloy powder manufactured by the atomization method is adjusted to have a particle size suitable for the intended construction method. Here, as a method of placing the solder material of the present invention on a stainless steel base material, selection can be made from among a method of scattering and applying (spreading) a binder and the powder on the base material surface, a method of applying a paste obtained by mixing a binder and the powder, a method of placing the filler metal by processing the material into a sheet form or a foil form, a method of placing the filler metal by thermal spraying of the powder, and the like.

### EXAMPLES

The alloys of the examples of the present invention and the alloys of the comparative examples that had been adjusted and blended in the above-described manner were melted and prepared, and the melting point (liquidus temperature), the transverse rupture strength, the wettability, and the corrosion resistance to hydrochloric acid were evaluated by the following methods.

### (1) Melting point (liquidus temperature) measurement

The melting point temperature was measured by the thermal analysis method of melting 100 g of a bare metal having the blending composition of each alloy by heating to about 1500°C in an argon stream using an electric furnace, and thereafter continuously measuring the temperature of the alloy while naturally cooling the metal in the furnace. Specifically, a recordation meter connected to a thermocouple that had been inserted into the central part of the melt was allowed to draw a thermal analysis curve, and the liquidus temperature was read from the cooling curve thereof.

### (2) Transverse rupture test

A bare metal was melted by the same method as in (1) described above, and the melt was cast into a quartz glass tube and thereafter subjected to machine processing to have a size of about φ5 × 35 mm, thereby to prepare a specimen. Next, the specimen was placed on a transverse rupture test fixture (three-point support, intersupport distance 25.4 mm (JIS Z 2511:2006 "fixture described in the pressed powder body strength measurement method by the metal powder-bending test") ; the load when the specimen was fractured by application of the load in a universal testing machine was measured; and the transverse rupture strength (N/mm²) of the alloy was calculated from the specimen shape and the fracture load.

### (3) Wetting test

A round rod having a diameter of about 5 mm obtained in (2) described above was cut to have a weight of 0.15 g (about 0.6 mm thickness) thereby to prepare a specimen. Next, the specimen was placed on an SUS304 stainless steel base material degreased with acetone, and a brazing heat treatment was carried out in a vacuum of 10⁻³ Pa region at 1150°C for 30 minutes. After the brazing heat treatment, the area in which the filler metal had wetted, flowed, and spread on the base material was measured, so as to evaluate the wettability.
Indices of evaluation are shown below.
"area after brazing heat treatment ≥ 110 mm²: ○"
"area after brazing heat treatment < 110 mm²: ×"

### (4) Corrosion test by 10% hydrochloric acid

A bare metal was melted by the same method as in (1) described above, and the melt was cast into a shell mold. Thereafter, this cast piece was subjected to machine processing to have a size of about 10 × 10 × 20 mm, so as to prepare a specimen. Next, a 10 aqueous solution of hydrochloric acid was prepared in a 300 cc beaker, and the specimen was put thereinto, so as to carry out a corrosion test by the total immersion method. The test conditions were set to be a test temperature of 60°C and a test time of 6 hours. Then, the amount of decrease in mass per unit area per unit time before and after the test was calculated as an amount of decrease by corrosion (mg/m²·s), so as to evaluate the corrosion resistance to hydrochloric acid.
Indices of evaluation are shown below.
"amount of decrease by corrosion ≤ 3.0 mg/m²·s: ○"
"amount of decrease by corrosion > 3.0 mg/m²·s: ×"

Table 1 shows the examples of the present invention, and Tables 2 and 3 show the comparative examples.

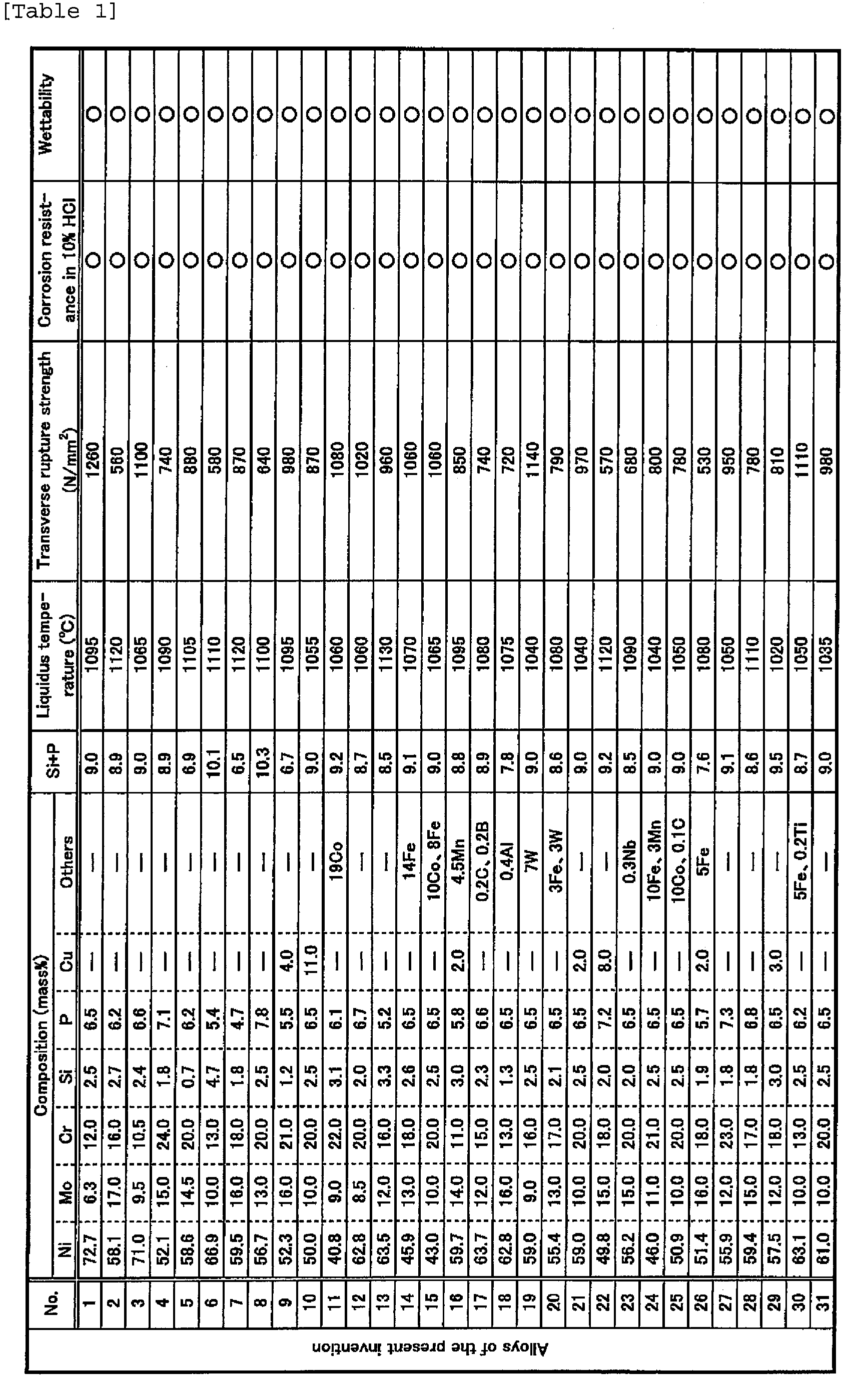

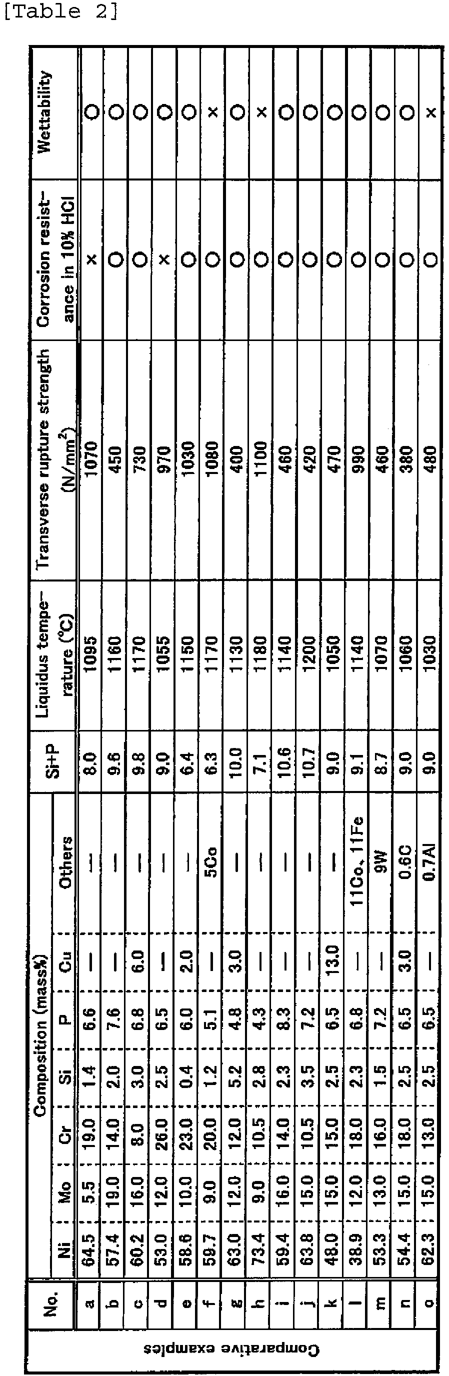

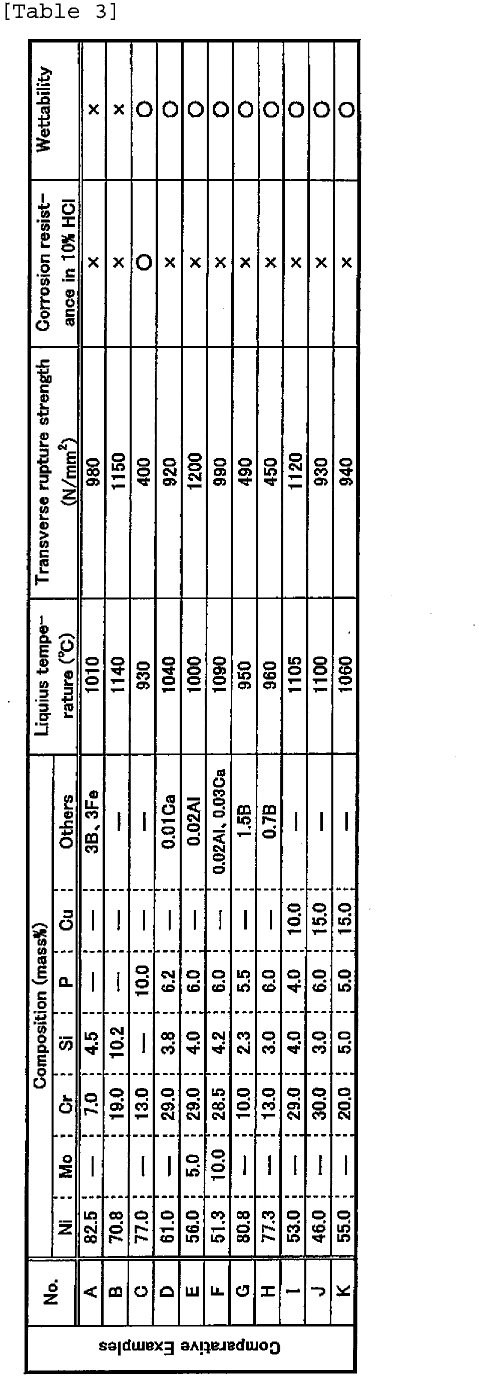

The alloys (a) to (o) of the comparative examples shown in Table 2 are alloys having composition that is out of the scope of the claims of the present invention. In Comparative Example (a), Mo is smaller in amount than the lower limit of the scope of the claims. In Comparative Example (d), Cr is larger in amount than the upper limit of the scope of the claims. In these two, the amount of decrease by corrosion does not satisfy the targeted value. In Comparative Example (b), Mo is larger in amount than the upper limit of the scope of the claims. In Comparative Example (c), Cr is smaller in amount than the lower limit of the scope of the claims. In these two, the liquidus temperature does not satisfy the targeted value, and Comparative Example (b) also has low transverse rupture strength. In Comparative Example (e), Si is smaller in amount than the lower limit of the scope of the claims, and the total of Si + P is smaller in amount than the lower limit of the scope of the claims. In Comparative Example (i), P is larger in amount than the upper limit of the scope of the claims, and the total of Si + P is larger in amount than the upper limit of the scope of the claims. In these two, the liquidus temperature does not satisfy the targeted value, and Comparative Example (i) also has low transverse rupture strength. In Comparative Examples (f) and (j), the total of Si + P is out of the scope of the claims though each added element is within the scope of the claims. In these two, the liquidus temperature does not satisfy the targeted value. In Comparative Example (f), the wettability does not satisfy the targeted value. In Comparative Example (j), the transverse rupture strength does not satisfy the targeted value. In Comparative Example (g), Si is larger in amount than the upper limit of the scope of the claims, and the transverse rupture strength does not satisfy the targeted value. In Comparative Example (h), P is smaller in amount than the lower limit of the scope of the claims and Ni is larger in amount than the upper limit of the scope of the claims, so that the liquidus temperature is high, and the wettability does not satisfy the targeted value. In Comparative Example (k), Cu is larger in amount than the upper limit of the scope of the claims, and the transverse rupture strength is low. In Comparative Examples (1) to (o), the other added elements are larger in amount than the upper limit of the scope of the claims, and moreover, in Comparative Example (1), Ni is smaller in amount than the lower limit of the scope of the claims. In these, any of the liquidus temperature, the transverse rupture strength, and the wettability does not satisfy the targeted value.

The alloys (A), (B), and (C) of the comparative examples shown in Table 3 are representative Ni brazing filler metals defined in JIS Z 3265, and the alloys (D) to (K) of the comparative examples are the alloys disclosed in Patent Documents 1, 2, and 3, respectively. Comparative Example (A) does not satisfy the target values of the amount of decrease by corrosion and the wetting state. Comparative Example (B) does not satisfy the target values of the liquidus temperature, the amount of decrease by corrosion, and the wetting state. Also, Comparative Example (C) has low transverse rupture strength. Further, Comparative Examples (G) and (H) have low transverse rupture strength, and none of the alloys of Comparative Examples (D) to (K) satisfy the target value of the amount of decrease by corrosion.

On the other hand, as will be clear also from Table 1, the alloys 1 to 31 of the examples of the present invention satisfy the target values of all of the liquidus temperature, the transverse rupture strength, the wettability, and the amount of decrease by corrosion, and have a melting point, material strength, and brazeability suitable as a nickel brazing filler metal and also are provided with excellent hydrochloric acid corrosion resistance.

Here, the alloys of the examples of the present invention show good brazeability to austenite-type stainless steel, ferrite-type stainless steel, and martensite-type stainless steel other than SUS304, and further to Ni-based heat resistant alloys and corrosion resistant alloys such as inconel and hastelloy.

Also, the alloys of the examples show good brazeability even if the brazing atmosphere is a reducing hydrogen atmosphere, an inert argon atmosphere, or a nitrogen atmosphere besides vacuum.

Also, the alloys of the examples show good corrosion resistance also to various types of acid such as sulfuric acid and nitric acid and to ammonia water and the like besides hydrochloric acid. In particular, the alloys of the examples to which Cu has been added improves the corrosion resistance to sulfuric acid to a considerable extent.

### INDUSTRIAL APPLICABILITY

As described above, the Ni brazing filler metal of the present invention is excellent in melting point, strength, and corrosion resistance, and has good brazeability in brazing various types of stainless steel and Ni alloy parent metals. Therefore, the Ni brazing filler metal of the present invention can be widely used not only for EGR coolers but also widely as a bonding material for manufacturing brazed apparatus components such as heat exchangers and hot-water supplying components related to the environment and energy.

## Claims

1. A hydrochloric acid corrosion resistant alloy for brazing which contains 6.0-18.0 mass% of Mo, 10.0-25.0 mass% of Cr, 0.5-5.0 mass% of Si, and 4.5-8.0 mass% of P, with the remainder being 40.0-73.0 mass% of Ni and unavoidable impurities, and the total of Si and P being 6.5-10.5 mass%.

2. The hydrochloric acid corrosion resistant alloy for brazing as defined in Claim 1, which further contains Cu in an amount of 12.0 mass% or less.

3. The hydrochloric acid corrosion resistant alloy for brazing as defined in Claim 1 or 2, which contains 20.0 mass% or less of Co, 15.0 mass% or less of Fe, 8.0 mass% or less of W, 5.0 mass% or less of Mn, and 0.5 mass% or less of the total of C, B, Al, Ti, and Nb, with the total of Co, Fe, W, Mn, C, B, Al, Ti and Nb being 20.0 mass% or less.
